# EUROPEAN PATENT SPECIFICATION

(11) **EP 2 811 278 B1**
(45) Date of publication and mention of the grant of the patent: **27.12.2017**
(21) Application number: 14170575.6
(22) Date of filing: 30.05.2014
(51) Int. Cl.: G01M 1/16, G01M 1/22

(54) **Sensorless monitoring of electric generator rotor unbalance**
Sensorlose Überwachung der Rotorunwucht eines elektrischen Generators
Surveillance sans capteur d'un déséquilibre de rotor de générateur électrique

(30) Priority: 07.06.2013 US 201313912703
(43) Date of publication of application: 10.12.2014
(73) Proprietor: Hamilton Sundstrand Corporation, Windsor Locks, CT 06096-1010 (US)
(72) Inventor: Wallin, Bruce R., Rockford, IL 61114 (US)
(74) Representative: Gittins, Alex Michael

(56) References cited:
- US-A- 5 483 833
- US-A1- 2011 036 166

## Description

### BACKGROUND OF THE INVENTION

The subject matter disclosed herein relates to electric generator rotors, and more specifically, to providing sensorless and continuous monitoring of electric generator rotor unbalance.

The mechanical unbalance state of an electric power generator rotor is an important operational parameter with respect to self-generated loads, vibration, and resulting generator service life. Conventionally, generator rotor unbalance is monitored indirectly through a measurement of the vibration of the generator's housing responsive to an unbalance. Dedicated sensors are typically installed to measure the structural vibration of the generator in response to rotor unbalance. The dedicated sensors and associated wiring, however, bring significant burden to the rotor unbalance measurement through additional cost, weight and system reliability degradation. In transport applications of electric generators (e.g., aircraft, automobiles), the weight of the additional sensors, wire harnesses, and signal power and conditioning equipment have a negative effect on fuel economy. Accordingly, rotor unbalance measurements are typically not performed continuously (e.g., aircraft generator on wing), but only periodically during ground checks, if at all.

US 5483833 discloses method and apparatus for monitoring aircraft components.

### BRIEF DESCRIPTION OF THE INVENTION

According to an aspect of the present invention, there is provided a method for sensorless and continuous monitoring of electric generator rotor unbalance as claimed in claim 1.

According to another aspect of the present invention, there is provided a computer system for sensorless rotor unbalance monitoring as claimed in claim 4.

There is also described a computer program product for sensorless and continuous monitoring of electric generator rotor unbalance is provided. The computer program product includes a storage medium having computer-readable program code embodied thereon, which when executed by a computer processor, causes the computer processor to implement a method. The method includes measuring instantaneous speed of a generator rotor based on an electrical waveform from the generator. A speed flutter is extracted from the electrical waveform. The speed flutter of embodiments represents a time-based distortion of the electrical waveform. Accordingly, a magnitude of generator rotor unbalance is then quantified proportional to the speed flutter.

Additional features and advantages are realized through the techniques of the present invention. Other embodiments and aspects of the invention are described in detail herein and are considered a part of the claimed invention. For a better understanding of the invention with the advantages and the features, refer to the description and to the drawings.

### BRIEF DESCRIPTION OF THE DRAWINGS

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:
FIG. 1 is a block diagram depicting a computing device for providing sensorless and continuous monitoring of electric generator rotor unbalance according to an embodiment;
FIG. 2 depicts a diagrammatic example of an unbalanced induced speed flutter frequency for a generator according to an embodiment;
FIG. 3 depicts a diagrammatic example of an electrical voltage waveform that is associated with the unbalanced induced speed flutter from FIG. 2 according to an embodiment;
FIG. 4 depicts a diagrammatic example of a measured electrical voltage waveform with speed flutter according to an embodiment;
FIG. 5 depicts a diagrammatic example of a difference signal proportional to rotor unbalance using a direct comparative method according to an embodiment;
FIG. 6 depicts a block diagram of a process for direct comparative analysis of speed flutter using analog signal processing according to an embodiment;
FIG. 7 depicts a block diagram of a process for direct comparative analysis of speed flutter using digital signal processing according to an embodiment;
FIG. 8 depicts a block diagram of a process for monitoring a generator rotor unbalance using analog-based frequency demodulation analysis according to an embodiment; and
FIG. 9 depicts a block diagram of a process for monitoring a generator rotor unbalance using digitally-based frequency demodulation analysis according to an embodiment.

### DETAILED DESCRIPTION OF THE INVENTION

Embodiments disclosed herein provide sensorless and continuous monitoring of electric generator rotor unbalance. An aspect of embodiments includes measuring instantaneous speed of a generator rotor based on an electrical waveform from the generator. A speed flutter is extracted from the electrical waveform. The speed flutter of embodiments represents a time-based distortion of the electrical waveform. Accordingly, a magnitude of generator rotor unbalance is then quantified proportional to the speed flutter.

A conventional technique for monitoring generator rotor unbalance includes measuring the vibration of the generator's housing in response to an unbalance. The correlation of the structural vibration in response to rotor unbalance is specific to each generator model type and installation. This typically includes multiple levels of both amplitude and frequency (i.e., speed) non-linearities due to the dynamic characteristics of the generator bearings, structure and mounted boundary condition. Considerable development effort is therefore required to fully characterize this correlation prior to application of the conventional technique. Moreover, the conventional technique needs to be repeated for each application.

Embodiments disclosed herein rely on a direct measurement of rotor instantaneous speed (i.e., angular position function versus time), which is directly and linearly related to the dynamic torque acting on the generator rotor. According to embodiments, the portion of the dynamic torque that is associated with rotor unbalance is extracted from the total signal by way of waveform time distortion analysis. Therefore, the development effort needed to determine the proper correlation for each application according to embodiments is significantly reduced.

The conventional technique utilizes the vibration measurement of the generator's housing to infer generator unbalance, and therefore, requires dedicated sensors and associated wiring for continuous monitoring. The addition of dedicated sensors and associated wiring brings considerable added cost, weight, and potential reliability degradation due to instrumentation/wiring failure. Accordingly, the conventional technique has very limited application for continuous monitoring. Embodiments disclose a sensorless rotor unbalance measurement method, system, and computer program product that provides continuous knowledge of the generator rotor unbalance state. This knowledge provides continuous health monitoring of the generator and supports actual on-condition based maintenance for an operator.

Another conventional technique for monitoring generator rotor unbalance interrogates the frequency content of the available generator voltage waveforms. This conventional technique monitors the changes in a calculated harmonic content of rotor rotational speed by using Fourier transform methods. However, the effect of generator rotor unbalance generates a dynamic torque acting on the rotor at a once per revolution periodicity. This creates a time based distortion of the waveform, and not an amplitude or shape based distortion for which analysis in the frequency domain is appropriate. The resulting calculated harmonic content required to define the time based distortion is very small and distributed over multiple harmonics. Increases in rotor unbalance can therefore result in either an increase or decrease in harmonic amplitudes, as required to define the change in time based distortion. Changes to the actual generator voltage waveform for various other reasons (e.g., load and power factor sensitivity, rotor/stator winding degradation, and the like) unrelated to mechanical rotor unbalance also result in changes to the harmonic content amplitudes and distributions. Accordingly, conventional attempts to correlate a change in the harmonic content amplitude and distribution specifically to rotor unbalance have been unsuccessful and require significant development effort. Embodiments simplify the correlation by performing time based analysis to directly characterize the time based distortion of the electrical generator voltage waveform.

Aspects of embodiments provide sensor-less monitoring of generator unbalance based on the concept that speed flutter is induced into the generator as a direct result of, and linearly to, the unbalance of the generator rotor assembly. This speed flutter is the result of gravitational forces acting on the net rotor unbalance, which results in a mechanical oscillatory (i.e., dynamic) torque acting on the rotor. The dynamic torque causes cyclic acceleration and deceleration of the rotor at its operational speed such that the instantaneous speed of the rotor varies with angle of rotation. Embodiments utilize the available generator electrical waveforms (e.g., voltage or current) either from the main windings, installed permanent magnet alternator (PMA), or installed permanent magnet generator (PMG), either singly or in any combination of multiple signals, to measure the instantaneous speed of the generator rotor. Each of these waveforms is time distorted due to the rotor unbalance induced dynamic torque. The degree of distortion is directly proportional to the magnitude of mechanical unbalance. According to embodiments, both analog and digital techniques may quantify the magnitude of the synchronous (i.e., once per revolution) waveform time distortion (i.e., speed flutter), which is directly scalable to the mechanical rotor unbalance magnitude and/or change thereof. These include both waveform comparative analysis and frequency demodulation methods.

Embodiments disclosed herein utilize speed flutter from available generator electrical voltage waveforms for sensorless continuous monitoring of aircraft electric power generator rotor unbalance regardless of the specific technique used for the measurement of the speed flutter. The method, system, and computer program product according to embodiments is applicable to all types of modern electrical power generators including synchronous, permanent magnet, and switch reluctance configurations. In aircraft electrical power systems, the embodiments are applicable to primary systems (e.g., engine mounted), auxiliary systems (e.g., auxiliary power unit (APU) mounted), dedicated PMA systems, and emergency generator systems.

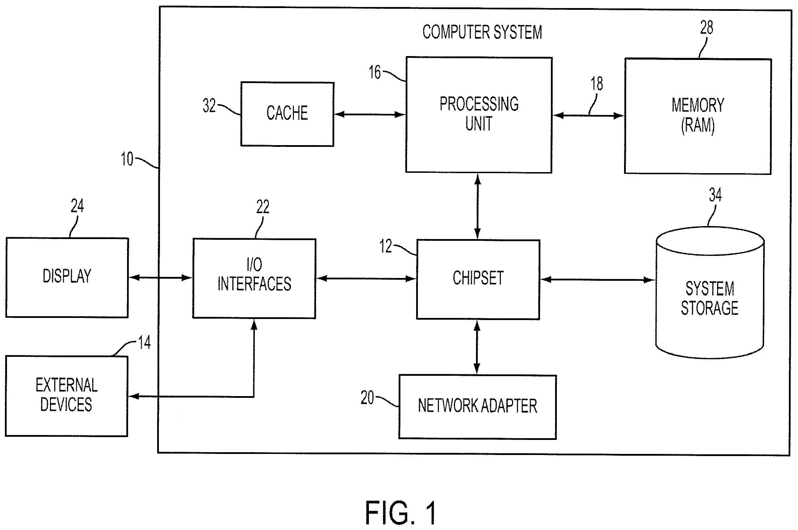

Referring now to FIG. 1, a block diagram of a computer system 10 suitable for providing sensorless and continuous monitoring of electric generator rotor unbalance according to exemplary embodiments is shown. Computer system 10 is only one example of a computer system and is not intended to suggest any limitation as to the scope of use or functionality of embodiments described herein. Regardless, computer system 10 is capable of being implemented and/or performing any of the functionality set forth hereinabove.

Computer system 10 is operational with numerous other general purpose or special purpose computing system environments or configurations. Examples of well-known computing systems, environments, and/or configurations that may be suitable for use with computer system 10 include, but are not limited to, personal computer systems, server computer systems, thin clients, thick clients, cellular telephones, handheld or laptop devices, multiprocessor systems, microprocessor-based systems, set top boxes, programmable consumer electronics, network PCs, minicomputer systems, mainframe computer systems, and distributed cloud computing environments that include any of the above systems or devices, and the like. Special-purpose computer systems include hardware accelerators such as FPGAs (Field-Programmable Gate Arrays), GPUs (Graphics Processing Units), and similar systems, which may be used in lieu of or in addition to general-purpose processors.

Computer system 10 may be described in the general context of computer system-executable instructions, such as program modules, being executed by the computer system 10. Generally, program modules may include routines, programs, objects, components, logic, data structures, and so on that perform particular tasks or implement particular abstract data types. Computer system 10 may be practiced in distributed cloud computing environments where tasks are performed by remote processing devices that are linked through a communications network. In a distributed computing environment, program modules may be located in both local and remote computer system storage media including memory storage devices.

As shown in FIG. 1, computer system 10 is shown in the form of a general-purpose computing device, also referred to as a processing device. The components of computer system may include, but are not limited to, one or more processors or processing units 16, a system memory 28, and a bus 18 that couples various system components including system memory 28 to processor 16. Computer system 10 may include a chipset 12 to manage the data flow between the processor 16, memory 28 and external devices 14.

Bus 18 represents one or more of any of several types of bus structures, including a memory bus or memory controller, a peripheral bus, an accelerated graphics port, and a processor or local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnects (PCI) bus.

Computer system 10 may include a variety of computer system readable media. Such media may be any available media that is accessible by computer system/server 10, and it includes both volatile and non-volatile media, removable and non-removable media.

System memory 28 can include computer system readable media in the form of volatile memory, such as random access memory (RAM). Computer system may also include cache memory 32. Computer system 10 may further include other removable/non-removable, volatile/non-volatile computer system storage media. By way of example only, storage system 34 can be provided for reading from and writing to a non-removable, non-volatile magnetic media (not shown and typically called a "hard drive"). Although not shown, a magnetic disk drive for reading from and writing to a removable, non-volatile magnetic disk (e.g., a "floppy disk"), and an optical disk drive for reading from or writing to a removable, non-volatile optical disk such as a CD-ROM, DVD-ROM or other optical media can be provided. In such instances, each can be connected to bus 18 by one or more data media interfaces. As will be further depicted and described below, memory 28 may include at least one program product having a set (e.g., at least one) of program modules that are configured to carry out the functions of embodiments of the disclosure.

Computer system 10 may also communicate with one or more external devices 14 such as a keyboard, a pointing device, a display 24, etc.; one or more devices that enable a user to interact with computer system/server 10; and/or any devices (e.g., network card, modem, etc.) that enable computer system/server 10 to communicate with one or more other computing devices. Such communication can occur via Input/Output (I/O) interfaces 22. Still yet, computer system 10 can communicate with one or more networks such as a local area network (LAN), a general wide area network (WAN), and/or a public network (e.g., the Internet) via network adapter 20. As depicted, network adapter 20 communicates with the other components of computer system 10 via bus 18. It should be understood that although not shown, other hardware and/or software components could be used in conjunction with computer system 10. Examples include, but are not limited to: microcode, device drivers, redundant processing units, external disk drive arrays, RAID systems, tape drives, and data archival storage systems, etc.

An exemplary embodiment utilizes speed flutter as a basis for unbalance monitoring. The net unbalance of the generator rotor is acted on by gravitational forces as it rotates. As the net unbalance vector passes "top dead center" with respect to the gravitational field the effect is an additive torque which accelerates the rotor rotation, and as it passes "bottom dead center" it creates a negative torque which decelerates the rotor. This dynamic torque term at the rotational speed of the rotor shaft is directly related to the magnitude of the generator rotor unbalance magnitude. Unlike the radial force generated by the unbalance, which is proportional to rotor speed squared, the dynamic torque term is constant at all speeds. According to an embodiment, the analysis of this speed flutter, which is direct and absolute, is the basis for unbalance monitoring.

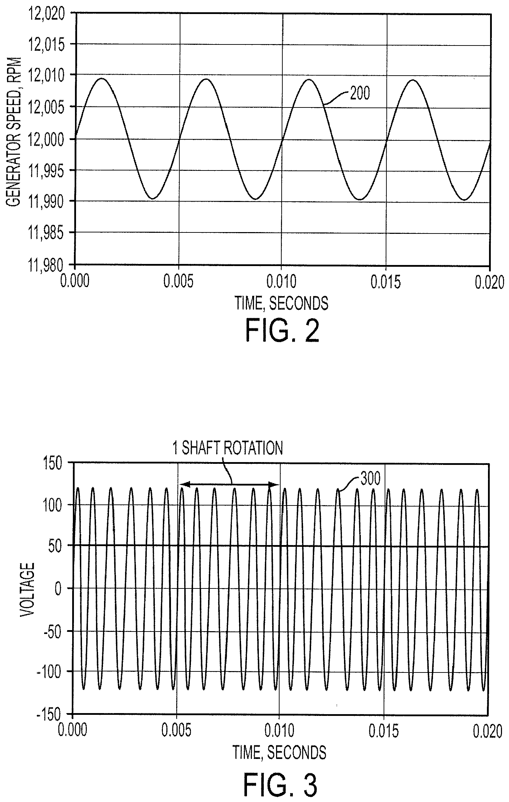

With reference to FIG. 2, a diagrammatic example of an unbalanced induced speed flutter frequency 200 for a generator according to an embodiment is generally shown. FIG. 2 shows sinusoidal speed oscillations about the nominal speed of the rotor generated by a rotor unbalance (i.e., speed flutter 200). Referring to FIG. 3, a diagrammatic example of an electrical voltage waveform 300 that is associated with the unbalanced induced speed flutter from FIG.2 according to an embodiment is shown. FIG. 3 shows that, although the waveform 300 from the generator is still predominantly sinusoidal, there are variations in the zero crossing of the electrical voltage waveform 300 created as the rotor accelerates and decelerates due to the unbalanced induced dynamic torque term.

According to an exemplary embodiment, the synchronous speed flutter term within the electric generator's voltage waveform may be resolved by a direct comparative methods and/or a frequency demodulation method. The direct comparative method of an embodiment may be implemented on all generator systems. The frequency demodulation method of an embodiment may require that the electrical waveform frequency be equal to or greater than four times the generator rotational frequency (i.e., eight poles or greater). In electrical systems with sufficient poles, the frequency demodulation method of an embodiment provides reduced complexity of the signal processing and analysis algorithms. According to an embodiment, the direct comparative method and the frequency demodulation method may be developed using fully analog signal processing, fully digital signal processing, and hybrid techniques using a combination of both as disclosed below.

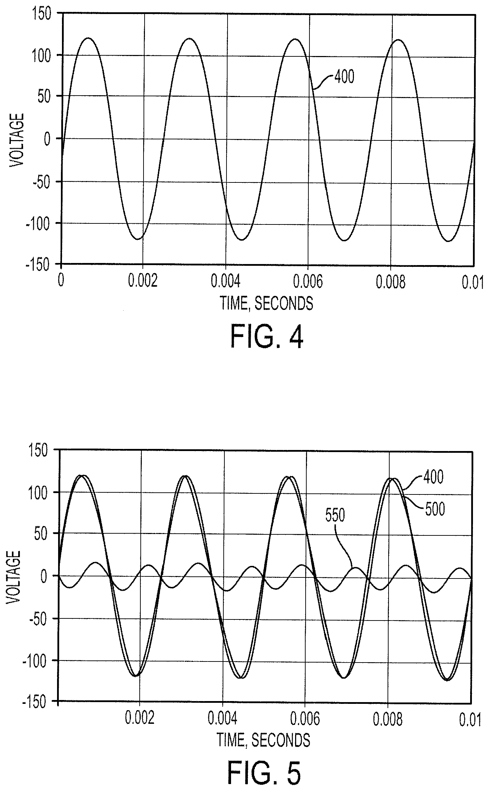

In the direct comparative method of an embodiment, the average or nominal base period of the electrical voltage waveform is used to assess an average speed. A theoretical waveform is then generated and compared with the actual waveform according to an embodiment. The theoretical waveform may be generated in analog form by a tunable crystal oscillator or in digital form by direct calculation. According to an embodiment, the difference or deviation between the actual waveform and the theoretical waveform is then directly, and linearly, related to the speed flutter of the generator rotor. The synchronous once per revolution content of the speed flutter is directly proportional to the unbalance of the generator rotor assembly according to an embodiment. A diagrammatic example of a measured electrical voltage waveform 400 with speed flutter according to an embodiment is shown in FIG. 4. Here a 2 pole, 24,000 revolutions per minute (RPM) generator is exhibiting 0.01% of synchronous speed flutter (i.e., 24,000 +/- 2.4 RPM). The waveform time distortion is not readily apparent at this level, and attempting to resolve the distortion in waveform shape by known Fourier transform methods may be within the error of the analysis.

Referring to FIG. 5, a diagrammatic example of a difference signal 550 proportional to rotor unbalance using a direct comparative method according to an embodiment is shown. By using the comparative method of an embodiment, as shown in Fig. 5, the minor deviation between the measured voltage waveform 400 and the theoretical voltage waveform 500 is readily apparent. Accordingly, the difference signal 550 (i.e., speed flutter) between the measured voltage waveform 400 and the theoretical voltage waveform 500 can be accurately measured and the rotor unbalance quantified according to an embodiment. Although the speed flutter is occurring at the once per revolution of the generator rotor, the resulting difference signal 550, which represents the rotor unbalance magnitude, is at the two per revolution of the generator rotor. Speed flutter of the order of 0.001% (i.e., 1 RPM in 100,000 RPM) may be accurately and repeatedly measured using the direct comparative method of an embodiment.

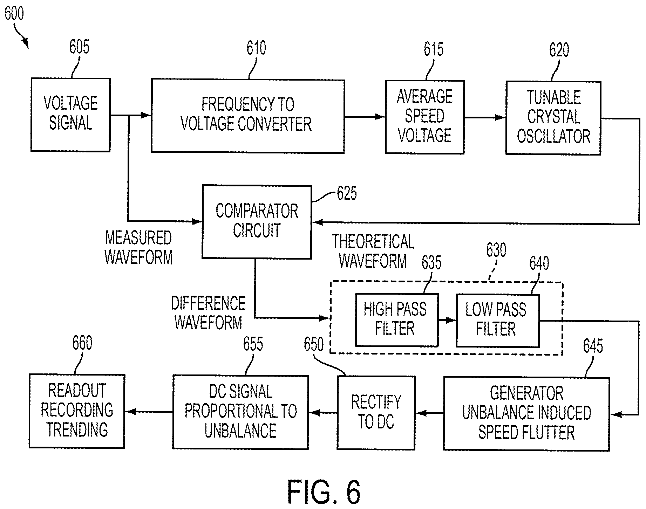

FIG. 6 depicts a block diagram of a process 600 for direct comparative analysis of speed flutter using analog signal processing according to an embodiment. The process 600 may be implemented by an embodiment of the processing unit 16 of computer system 10.

According to an embodiment, a measured waveform is derived from a voltage signal 605 from a generator to determine its rotor speed. A frequency to voltage converter (F/V) 610 is used to generate a slave voltage proportional to the average rotor speed. This slave voltage is then used to drive a tunable crystal oscillator 620 to create a sine wave, which is the source of the pure theoretical waveform replication. The actual measured voltage waveform and the theoretical waveform are then used in a comparator circuit 625 (e.g., signal subtraction) to generate the difference waveform according to an embodiment. The difference waveform represents the time based distortion of the waveform caused by speed flutter. Band pass filter module 630 (i.e., high pass filter 635 and low pass filter 640) attenuates frequency noise to extract the generator unbalance induced speed flutter 645 associated with the once per revolution rotor unbalance. This signal is then rectified to direct current (DC) at block 650. The resulting DC signal is used to create a value proportionate to the rotor unbalance at block 655, which is then displayed, recorded and trended at block 660.

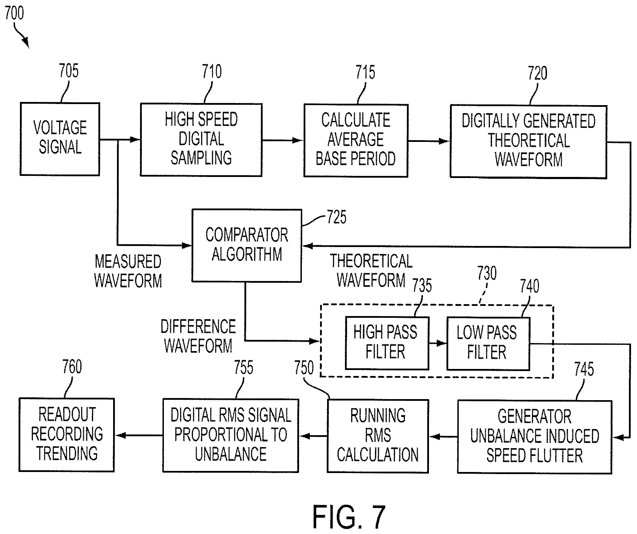

FIG. 7 depicts a block diagram of a process 700 for direct comparative analysis of speed flutter using digital signal processing according to an embodiment. The process 700 may be implemented by an embodiment of the processing unit 16 of computer system 10.

According to an embodiment, a measured waveform is derived from a voltage signal 705 from a generator to determine its rotor speed. This data is digitized at a high sampling rate as shown in block 710 and an average base period is calculated to represent mean rotor speed as shown in block 715. According to an embodiment, a digitally generated theoretical waveform 720 is then generated at the original high sampling rate. The actual measured voltage waveform and the theoretical waveform are then used in a comparator algorithm at block 725 (e.g., digital signal subtraction) to generate a difference waveform according to an embodiment. The difference waveform represents the time based distortion of the waveform caused by speed flutter. Band pass filter module 730 (i.e., high pass filter 735 and low pass filter 740) attenuates frequency noise to extract the generator unbalance induced speed flutter 745 associated with the once per revolution rotor unbalance. According to an embodiment, a root mean squared (RMS) calculation is run on the resulting digital signal at block 750 to create a running RMS value proportionate to the rotor unbalance at block 755, which is then displayed, recorded, and trended as shown in block 760.

For electrical systems where the electrical voltage waveform is four times or greater than the generator rotational speed, the frequency demodulation method of an embodiment may be utilized. The higher frequency voltage waveform acts as the carrier frequency and the once per revolution unbalance induced speed flutter creates frequency modulation of the carrier waveform. The relationship of the carrier frequency being equal to or greater than four times the base frequency of interest (once per revolution) is required to insure the data is not aliased in the signal processing. This is consistent with traditional frequency demodulation methods like that used in FM radio or FM telemetry systems. The frequency demodulation method of an embodiment eliminates the need to create or calculate a theoretical waveform to further simplify signal processing and analysis algorithms.

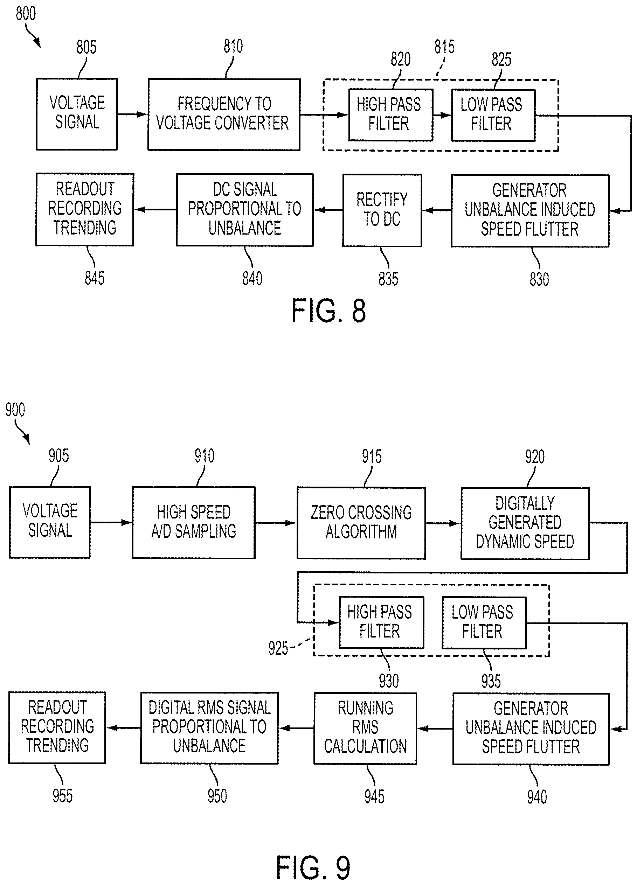

FIG. 8 depicts a block diagram of a process 800 for monitoring a generator rotor unbalance using analog-based frequency demodulation analysis according to an embodiment. The process 800 may be implemented by an embodiment of the processing unit 16 of computer system 10.

According to an embodiment, a voltage signal 805 from a generator is input to a frequency to voltage converter circuit (F/V) 810, which presents the instantaneous speed of the generator rotor as a voltage signal. Band pass filter module 815 (i.e., high pass filter 820 and low pass filter 825) attenuates frequency noise from the voltage signal to extract the generator unbalance induced speed flutter 830 associated with the once per revolution rotor unbalance. This signal is then rectified to direct current (DC) at block 835. The resulting DC signal is used to create a value proportionate to the rotor unbalance at block 840, which is then displayed, recorded and trended at block 845.

FIG. 9 depicts a block diagram of a process 900 for monitoring a generator rotor unbalance using digitally-based frequency demodulation analysis according to an embodiment. The process 900 may be implemented by an embodiment of the processing unit 16 of computer system 10.

According to an embodiment, a voltage signal 905 is digitized at a high sampling rate 910 and a zero crossing algorithm 915 is used to generate a digitally generated dynamic speed 920. Band pass filter module 925 (i.e., high pass filter 930 and low pass filter 935) attenuates frequency noise from the digitally generated dynamic speed signal to extract the generator unbalance induced speed flutter 940 associated with the once per revolution rotor unbalance. According to an embodiment, a RMS calculation is run on the resulting digital signal at block 945 to create a running RMS value proportionate to the rotor unbalance at block 950, which is then displayed, recorded, and trended as shown in block 940.

Technical effects and benefits of the embodiments disclosed herein include providing continuous knowledge of an electric power generator rotor unbalance state at a significant reduction in cost and complexity. The sensorless method of disclosed embodiments provides the ability to have a continuous (e.g., aircraft generator on wing) or a cost effective maintenance ground check. The current knowledge of the actual generator rotor unbalance state provide by embodiments allow for intelligent on-condition maintenance by the operator and results in a significant reduction in the total cost of product ownership.

Embodiments disclosed herein resolve speed flutter by looking at a waveform representative of the speed of the rotor and looking at changes in the periodicity or repetitiveness of the changes versus time.

Embodiments disclosed herein provide a sensorless approach using existing and available electrical voltage waveforms. Embodiments provide a direct physics-based linkage of speed flutter and a rotor unbalance state. Embodiments eliminate non-linear effects included in conventional vibration measurement techniques, are less sensitive to generator rotor speed and electrical load than vibration measurement techniques, and reduce the development effort required to characterize the speed flutter and rotor unbalance correlation for specific applications. Moreover, embodiments provide direct and proper time-based waveform analysis for resolving the speed flutter content, either by comparative analysis or frequency demodulation methods. According to embodiments, simple band pass filters may extract the synchronous once per rotation unbalance induced speed flutter content.

The unbalance state of the generator rotor assembly is generally associated with material unbalance, as well as with whirl resulting from bearing deflection and clearance. Accordingly, the unbalance state can also be a direct indication of problems with bearing support integrity, bearing wear and/or loss of bearing preload. Knowledge of the generator rotor unbalance state can be used to limit the dynamic forces resulting from high or excessive unbalance. Therefore, embodiments may be used within a safety system where excessive loads, which could be damaging to the rotor, bearings, or structure, can be avoided. Embodiments may eliminate or reduce the rotor containment requirements of the design, with the potential for a significant reduction in generator design weight.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present disclosure has been presented for purposes of illustration and description, but is not intended to be exhaustive or limited to the disclosure in the form disclosed. Many modifications and variations will be apparent to those of ordinary skill in the art without departing from the scope of the disclosure. The embodiments were chosen and described in order to best explain the principles of the disclosure and the practical application, and to enable others of ordinary skill in the art to understand the disclosure for various embodiments with various modifications as are suited to the particular use contemplated.

Further, as will be appreciated by one skilled in the art, aspects of the present disclosure may be embodied as a system, method, or computer program product. Accordingly, aspects of the present disclosure may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing.

Computer program code for carrying out operations for aspects of the present disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present disclosure are described above with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the Figures illustrate the architecture, functionality, and operation of possible implementations of systems, methods, and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

## Claims

1. A computer-implemented method for sensorless rotor unbalance monitoring, comprising:
measuring, by a processing unit (16), instantaneous speed of a generator rotor based on an electrical waveform (300) from the generator;
extracting a speed flutter (200) from the electrical waveform (300), the speed flutter (200) representing a time-based distortion of the electrical waveform; and
quantifying a magnitude of generator rotor unbalance proportional to the speed flutter (200); characterisd in that:
the extracting of the speed flutter (200) utilizes at least one of direct comparative analysis and frequency demodulation, and frequency demodulation may be utilized when the electrical waveform frequency is equal to or greater than four times a rotational frequency of the generator rotor.

2. The computer-implemented method of claim 1, wherein responsive to utilizing the direct comparative analysis, the extracting of the speed flutter (200) further comprises:
generating a theoretical waveform (500) based on a mean frequency of the electrical voltage waveform (300);
comparing the electrical voltage waveform (300) to the theoretical waveform (500); and
determining a difference waveform, the difference waveform representing the speed flutter (200) of the generator rotor.

3. The computer-implemented method of claim 1, wherein the quantifying of the magnitude of generator rotor unbalance comprises a selected one of analog signal processing and digital signal processing.

4. A computer system for sensorless rotor unbalance monitoring, the system comprising:
a memory (28) having computer readable computer instructions and a processing device (16) for executing the computer readable instructions to perform a method comprising:
measuring instantaneous speed of a generator rotor based on an electrical waveform (300) from the generator;
extracting a speed flutter (200) from the electrical waveform, the speed flutter (200) representing a time-based distortion of the electrical waveform (300); and
quantifying a magnitude of generator rotor unbalance proportional to the speed flutter (200); **characterised in that**:
the extracting of the speed flutter (200) utilizes at least one of direct comparative analysis and frequency demodulation, and frequency demodulation may be utilized when the electrical waveform frequency is equal to or greater than four times a rotational frequency of the generator rotor.

5. The computer system of claim 4, wherein responsive to utilizing the direct comparative analysis, the extracting of the speed flutter further comprises:
generating a theoretical waveform (500) based on a mean frequency of the electrical voltage waveform (300);
comparing the electrical voltage waveform (300) to the theoretical waveform (500); and
determining a difference waveform, the difference waveform representing the speed flutter (200) of the generator rotor.

6. The computer system of claim 4, wherein the quantifying of the magnitude of generator rotor unbalance comprises a selected one of analog signal processing and digital signal processing.

## Patentansprüche

1. Computerimplementiertes Verfahren für die sensorlose Überwachung der Rotorunwucht, umfassend:
Messen, durch eine Verarbeitungseinheit (16), der momentanen Geschwindigkeit eines Generatorrotors auf Grundlage einer elektrischen Wellenform (300) von dem Generator;
Extrahieren eines Geschwindigkeitsflatterns (200) aus der elektrischen Wellenform (300), wobei das Geschwindigkeitsflattern (200) eine zeitbasierte Verzerrung der elektrischen Wellenform darstellt; und
Quantifizieren einer Größe der Rotorunwucht des Generators proportional zu dem Geschwindigkeitsflattern (200); **dadurch gekennzeichnet, dass**:
das Extrahieren des Geschwindigkeitsflatterns (200) zumindest eines von direkter komparativer Analyse und Frequenzdemodulation anwendet, und Frequenzdemodulation angewandt werden kann, wenn die Frequenz der elektrischen Wellenform gleich einer oder größer als eine Drehfrequenz des Generatorrotors mal vier ist.

2. Computerimplementiertes Verfahren nach Anspruch 1, wobei als Reaktion auf die Anwendung der direkten komparativen Analyse das Extrahieren des Geschwindigkeitsflatterns (200) ferner Folgendes umfasst:
Erzeugen einer theoretischen Wellenform (500) auf Grundlage einer mittleren Frequenz der elektrischen Spannungswellenform (300) ;
Vergleichen der elektrischen Spannungswellenform (300) mit der theoretischen Wellenform (500); und
Bestimmen einer Differenzwellenform, wobei die Differenzwellenform das Geschwindigkeitsflattern (200) des Generatorrotors darstellt.

3. Computerimplementiertes Verfahren nach Anspruch 1, wobei das Quantifizieren der Größe der Rotorunwucht des Generators eine Auswahl aus analoger Signalverarbeitung und digitaler Signalverarbeitung umfasst.

4. Computersystem für die sensorlose Überwachung der Rotorunwucht, wobei das System Folgendes umfasst:
einen Speicher (28) mit computerlesbaren Computeranweisungen und eine Verarbeitungsvorrichtung (16) zur Ausführung der computerlesbaren Anweisungen, um ein Verfahren durchzuführen, das Folgendes umfasst:
Messen der momentanen Geschwindigkeit eines Generatorrotors auf Grundlage einer elektrischen Wellenform (300) von dem Generator;
Extrahieren eines Geschwindigkeitsflatterns (200) aus der elektrischen Wellenform, wobei das Geschwindigkeitsflattern (200) eine zeitbasierte Verzerrung der elektrischen Wellenform (300) darstellt; und
Quantifizieren einer Größe der Rotorunwucht des Generators proportional zu dem Geschwindigkeitsflattern (200); **dadurch gekennzeichnet, dass**:
das Extrahieren des Geschwindigkeitsflatterns (200) zumindest eines von direkter komparativer Analyse und Frequenzdemodulation anwendet, und Frequenzdemodulation angewandt werden kann, wenn die Frequenz der elektrischen Wellenform gleich einer oder größer als eine Drehfrequenz des Generatorrotors mal vier ist.

5. Computersystem nach Anspruch 4, wobei als Reaktion auf die Anwendung der direkten komparativen Analyse das Extrahieren des Geschwindigkeitsflatterns ferner Folgendes umfasst:
Erzeugen einer theoretischen Wellenform (500) auf Grundlage einer mittleren Frequenz der elektrischen Spannungswellenform (300) ;
Vergleichen der elektrischen Spannungswellenform (300) mit der theoretischen Wellenform (500); und
Bestimmen einer Differenzwellenform, wobei die Differenzwellenform das Geschwindigkeitsflattern (200) des Generatorrotors darstellt.

6. Computersystem nach Anspruch 4, wobei das Quantifizieren der Größe der Rotorunwucht des Generators eine Auswahl aus analoger Signalverarbeitung und digitaler Signalverarbeitung umfasst.

## Revendications

1. Procédé mis en oeuvre par ordinateur pour la surveillance sans capteur d'un déséquilibre de rotor, comprenant :
la mesure, par une unité de traitement (16), de la vitesse instantanée d'un rotor de générateur basée sur une forme d'onde électrique (300) provenant du générateur ;
l'extraction d'une fluctuation de vitesse (200) de la forme d'onde électrique (300), la fluctuation de vitesse (200) représentant une distorsion temporelle de la forme d'onde électrique ; et
la quantification d'une amplitude de déséquilibre de rotor de générateur proportionnelle à la fluctuation de vitesse (200) ;
**caractérisé en ce que** :
l'extraction de la fluctuation de vitesse (200) utilise au moins l'une d'une analyse comparative directe et d'une démodulation de fréquence, et la démodulation de fréquence peut être utilisée lorsque la fréquence de la forme d'onde électrique est supérieure ou égale à quatre fois une fréquence de rotation du rotor de générateur.

2. Procédé mis en oeuvre par ordinateur selon la revendication 1, dans lequel en réponse à l'utilisation de l'analyse comparative directe, l'extraction de la fluctuation de vitesse (200) comprend en outre :
la génération d'une forme d'onde théorique (500) basée sur une fréquence moyenne de la forme d'onde de la tension électrique (300) ;
la comparaison de la forme d'onde de la tension électrique (300) à la forme d'onde théorique (500) ; et
la détermination d'une forme d'onde différentielle, la forme d'onde différentielle représentant la fluctuation de vitesse (200) du rotor de générateur.

3. Procédé mis en oeuvre par ordinateur selon la revendication 1, dans lequel la quantification de l'amplitude du déséquilibre de rotor de générateur comprend un traitement sélectionné parmi un traitement de signaux analogiques et un traitement de signaux numériques.

4. Système informatique pour la surveillance sans capteur d'un déséquilibre de rotor, le système comprenant :
une mémoire (28) ayant des instructions informatiques lisibles par ordinateur et un dispositif de traitement (16) pour exécuter les instructions lisibles par ordinateur pour effectuer un procédé comprenant :
la mesure de la vitesse instantanée d'un rotor de générateur basée sur une forme d'onde électrique (300) du générateur ;
l'extraction d'une fluctuation de vitesse (200) de la forme d'onde électrique, la fluctuation de vitesse (200) représentant une distorsion temporelle de la forme d'onde électrique (300) ; et
la quantification d'une amplitude de déséquilibre de rotor de générateur proportionnelle à la fluctuation de vitesse (200) ;
**caractérisé en ce que** :
l'extraction de la fluctuation de vitesse (200) utilise au moins l'une d'une analyse comparative directe et d'une démodulation de fréquence, et la démodulation de fréquence peut être utilisée lorsque la fréquence de la forme d'onde électrique est supérieure ou égale à quatre fois une fréquence de rotation du rotor de générateur.

5. Système informatique selon la revendication 4, dans lequel en réponse à l'utilisation de l'analyse comparative directe, l'extraction de la fluctuation de vitesse comprend en outre :
la génération d'une forme d'onde théorique (500) basée sur une fréquence moyenne de la forme d'onde de la tension électrique (300) ;
la comparaison de la forme d'onde de tension électrique (300) à la forme d'onde théorique (500) ; et
la détermination d'une forme d'onde différentielle, la forme d'onde différentielle représentant la fluctuation de vitesse (200) du rotor de générateur.

6. Système informatique selon la revendication 4, dans lequel la quantification de l'amplitude du déséquilibre de rotor de générateur comprend un traitement sélectionné parmi un traitement de signaux analogiques et un traitement de signaux numériques.
